# EUROPEAN PATENT APPLICATION

(11) **EP 1 127 921 A1**
(43) Date of publication of application: **29.08.2001**
(21) Application number: 01301698.5
(22) Date of filing: 28.02.2001
(51) Int. Cl.: C08L 101/00, C08L 69/00

(54) **Flame retardant organic resin composition**

(30) Priority: 29.02.2000 JP 2000053063; 19.12.2000 JP 2000384662; 02.02.2001 JP 2001027017
(71) Applicant: Dow Corning Toray Silicone Co., Ltd., Tokyo (JP)
(72) Inventor: Hatanaka, Hidekatsu, Ichihara-shi, Chiba-Prefecture (JP); Nakanishi, Koji, Ichihara-shi, Chiba-Prefecture (JP); Furukawa, Haruhiko, Ichihara-shi, Chiba-Prefecture (JP); Shiromoto, Koji, Ichihara-shi, Chiba-Prefecture (JP); Ueki, Hiroshi, Ichihara-shi, Chiba-Prefecture (JP); Morita, Yoshitsugu, Ichihara-shi, Chiba-Prefecture (JP)
(74) Representative: Kyle, Diana

(57) **Abstract**

A flame retardant organic resin composition comprising (A) 100 parts by weight of an aromatic ring-containing organic resin and (B) 0.01 to 50 parts by weight of a branched organopolysiloxane described by average molecular formula (R¹₂SiO_{2/2})ₐ(R²SiO_{3/2})_{b}(SiO_{4/2})_{c}(R³₃O_{1/2})_{d}(HO_{1/2})ₑ, where R¹, R², and R³ are monovalent hydrocarbon groups selected from the group consisting of alkyl groups comprising 1 to 12 carbon atoms, alkenyl groups comprising 1 to 12 carbon atoms, and aryl groups comprising 6 to 12 carbon atoms, the content of aryl groups as a proportion of all the monovalent hydrocarbon groups is in a range of 20 mol% to 80 mol%, subscripts a and b are positive numbers, and subscripts c, d, and e are 0 or positive numbers, having a weight average molecular weight within a range of 300 to 10,000, and in which the content of silicon-bonded hydroxyl groups is not more than 1 wt%.

## Description

The present invention relates to a flame retardant organic resin composition.
Organic resins with aromatic rings, which are represented by aromatic polycarbonate resins and ether resins, possess superior mechanical strength, and electrical characteristics, and therefore they are used as engineering plastics in various fields, including OA equipment, electrical and electronic equipment, automobiles, and construction and civil engineering. In many cases, these organic resins have been rendered flame retardant for the purpose of fire prevention. One of the methods employed in the past to render such organic resins flame retardant consisted in admixing compounds containing chlorine atoms and bromine atoms to these organic resins. However, organic resin compositions containing compounds of this type had defects such as generating significant amounts of smoke during combustion and producing gases harmful to the human body or gases corrosive to metals and such. For this reason, a considerable number of flame retardant resin compositions have been proposed that do not produce gases harmful to the human body.

For example, in Japanese Patent Application Hei 08-176425, a composition is described that was produced by compounding a silicone resin containing phenyl groups and epoxy groups, which was obtained by the hydrolysis of a phenyl-containing silane and an epoxy-containing silane, with an aromatic polycarbonate resin. However, due to the presence of the epoxy groups, the composition had various problems, such as decreased heat resistance, and discoloration. In Japanese Patent Application Hei 10-139964, a polycarbonate composition is described that was produced by compounding a high molecular weight silicone resin with a weight average molecular weight in excess of 10,000, which consisted of difunctional siloxane units (D units) and trifunctional siloxane units (T units), with an aromatic polycarbonate resin. However, its moldability presented a problem, because the silicone resin used in the composition was a silicone resin of a high molecular weight. In addition, the composition was not easy to prepare. The flame retardancy of the resultant flame retardant polycarbonate resin composition was not sufficient either. In Japanese Patent Application Hei 11-140294, a flame retardant polycarbonate resin composition is described that was produced by compounding a silicone resin comprising difunctional siloxane units (D units) and trifunctional siloxane units (T units) and containing not less than 80 mol% of phenyl groups with an aromatic polycarbonate resin, but the composition could not be considered sufficiently flame retardant. In Japanese Patent Application Hei 11-222559, a flame retardant aromatic polycarbonate resin composition is described that was produced by compounding a silicone resin comprising difunctional siloxane units (D units) and trifunctional siloxane units (T units) and containing phenyl groups and alkoxy groups with an aromatic polycarbonate resin. This composition, however, did not possess sufficient flame retardancy and was not satisfactory for certain applications. In Japanese Patent Application Hei 11-140329, a flame retardant composition is described that was produced by compounding silica powder and a silicone resin comprising difunctional siloxane units (D units) and trifunctional siloxane units (T units) and including monofunctional siloxane units (M units) and containing phenyl and alkoxy groups with an aromatic polycarbonate resin. However this aromatic polycarbonate resin composition had various problems, such as the need to admix silica powder and a complicated manufacturing process.

We have now discovered that the flame retardant property of an aromatic ring-containing organic resin can be dramatically enhanced if a specific branched organopolysiloxane is compounded therewith. Therefore, it is an object of the present invention to provide an organic resin composition of superior flame retardancy.

The present invention provides a flame retardant organic resin composition comprising (A) 100 parts by weight of an aromatic ring-containing organic resin and (B) 0.01 to 50 parts by weight of a branched organopolysiloxane of average molecular formula (R¹₂SiO_{2/2})ₐ(R²SiO_{3/2})_{b}(SiO_{4/2})_{c}(R³₃O_{1/2})_{d}(HO_{1/2})ₑ, wherein R¹, R² and R³ are independently monovalent hydrocarbon groups selected from alkyl groups comprising 1 to 12 carbon atoms, alkenyl groups comprising 1 to 12 carbon atoms, and aryl groups comprising 6 to 12 carbon atoms, the content of aryl groups as a proportion of all the monovalent hydrocarbon groups is in a range of 20 mol% to 80 mol%, subscripts a and b are positive numbers, and subscripts c, d, and e are 0 or positive numbers, having a weight average molecular weight within a range of 300 to 10,000, and in which the content of silicon-bonded hydroxyl groups is not more than 1 wt%.

Component (A) of the present composition is an aromatic ring-containing resin without particular limitations concerning its type. Such an aromatic ring-containing resin is exemplified by aromatic polycarbonate resins and their copolymers, polyphenylene ether resins and their copolymers, polyarylate resins, polysulfone resins, polyethylene terephthalate resin, polybutylene terephthalate resin and other aromatic polyester resins; aromatic polyamide resins; polyimide resins; polyamideimide resins; polyphenylene sulfide resins; polystyrene resins, high-impact polystyrene resins, ABS resins, AS resins, and other styrene resins, and other thermoplastic resins; Novolac-series epoxy resins, biphenyl-series epoxy resins, vinyl ester resins, and other epoxy resins; phenolic resins, and other thermosetting resins. Preferable among these are aromatic polycarbonate resins and their copolymers.

The branched organopolysiloxane of component (B) improves the flame retardancy of the present composition. Component (B) is a branched organopolysiloxane described by average molecular formula R¹₃SiO_{2/2})ₐ(R²SiO_{3/2})_{b}(SiO_{4/2})_{c}(R³₃O_{1/2})_{d}(HO_{1/2})ₑ, where R¹, R², and R³ are independently monovalent hydrocarbon groups selected from alkyl groups comprising 1 to 12 carbon atoms, alkenyl groups comprising 1 to 12 carbon atoms, and aryl groups comprising 6 to 12 carbon atoms, the content of aryl groups as a proportion of all the monovalent hydrocarbon groups is in the range of 20 mol% to 80 mol%, subscripts a and b are positive numbers, and subscripts c, d, and e are 0 or positive numbers. Component (B) has a weight average molecular weight in the range of 300 to 10,000 and a content of silicon-bonded hydroxyl groups not more than 1 wt%. In the formula above, the alkyl groups comprising 1 to 12 carbon atoms are exemplified by methyl, ethyl, *n*-propyl, isopropyl, butyl, and hexyl; with methyl, ethyl, and isopropyl being preferred. The alkenyl groups comprising 1 to 12 carbon atoms are exemplified by vinyl, allyl, and butenyl. The aryl groups comprising 1 to 12 carbon atoms are exemplified by phenyl, naphthyl, and tolyl, with phenyl being preferred.

In component (B) the content of aryl groups comprising 6 to 12 carbon atoms as a proportion of all the monovalent hydrocarbon groups represented by R¹, R², and R³ must be within the range of 20 mol% to 80 mol%, preferably a range of 30 mol% to 80 mol%, and even more preferably in the range of 40 mol% to 80 mol%. If the content of aryl groups becomes higher than 80 mol%, the flame retardancy drops. Aryl groups contained in R¹SiO_{2/2} units are important for the flame retardancy. The content of aryl groups comprising 6 to 12 carbon atoms represented by R¹ is preferably 20 mol% to 100 mol%. In addition, from the standpoint of flame retardancy, it is even more preferable for R¹ to be alkenyl groups or alkyl groups comprising 1 to 12 carbon atoms and for the content of aryl groups comprising 6 to 12 carbon atoms being 20 to 100 mol%. Here, the alkyl groups are preferably methyl, ethyl, or propyl, and the aryl groups are phenyl.

The content of silicon-bonded hydroxyl groups in component (B) is not more than 1 wt%, preferably 0 to 0.5 wt%, and even more preferably 0 to 0.2 wt%. This is due to the fact that when the content of hydroxyl groups is high, stability during melting deteriorates, and during burning the principal chain of the thermoplastic resin is severed, and its flame retardancy decreases. In addition, alkoxy groups comprising 1 to 12 carbon atoms, which are exemplified by methoxy, ethoxy, *n*-propylpropoxy, isopropoxy, and butoxy can be present in component (B). In this case, the content of alkoxy groups is preferably not more than 3 wt%.

The weight average molecular weight of the branched organopolysiloxane is preferably in a range of 300 to 10,000. This is due to the fact that when the weight average molecular weight exceeds 10,000, various problems arise, for example, the synthesis of the branched organopolysiloxane becomes difficult. Also, the moldability of the present composition may decrease. The weight average molecular weight is typically determined using gel permeation chromatography (GPC).

It is preferable to obtain component (B) by an equilibration reaction based on the use of an alkali metal catalyst. For example, it is preferable to prepare it by the method described in Japanese Patent Application Hei 05-247212. Namely, the compound is prepared by subjecting organohalosilanes, which serve as the raw material for component (B) to hydrolysis in water, subjecting the resultant product of hydrolysis to a reaction of condensation, and then dehydrating the product via an equilibration reaction using an alkali metal catalyst, for example, potassium hydroxide. In addition, component (B) may be prepared by dehydration by subjecting existing branched organopolysiloxane to an equilibration reaction using an alkali metal catalyst. Because the branched organopolysiloxane obtained by the equilibration reaction method contains not more than 1 wt% of silicon-bonded hydroxyl groups per molecule, has a weight-average molecular weight of less than 10,000 and a low degree of molecular weight dispersion, it can improve flame retardancy without impairing moldability when mixed with organic resins.

Component (B) is solid at room temperature, its softening point being preferably not less than 50°C, and even more preferably not less than 80°C. This is due to the fact that when the softening point of component (B) is less than 50°C, its dispersibility in component (A) tends to decrease and blending it with component (A) tends to become difficult.

The proportion, in which component (B) is admixed is 0.01 to 50 parts by weight, preferably 0.1 to 30 parts by weight, and more preferably 0.1 to 10 parts by weight, per 100 parts by weight of component (A). This is due to the fact that when this amount is less than 0.01 parts by weight the desired flame retardancy cannot be imparted to the present composition and there is a decrease in mechanical strength when it exceeds 50 parts by weight.

The present composition comprises the above-described component (A) and component (B) and in addition may contain alkali metal salts of organic acids or organic acid esters or alkaline earth metal salts of organic acids or organic acid esters as component (C) in order to further enhance its flame retardancy. The organic acids forming part of such a component (C) are exemplified by organic sulfonic acids and organic carboxylic acids, while the organic acid esters are exemplified by organic phosphoric acid esters. The alkali metals are exemplified by sodium, potassium, lithium, and cerium, and the alkaline earth metals are exemplified by magnesium, calcium, strontium, and barium. Among these it is preferable to use metal salts of organic sulfonic acids, with metal salts of perfluoroalkane sulfonic acids and metal salts of aromatic sulfone sulfonic acids being even more preferable. Sodium perfluorobutanesulfonate, potassium perfluorobutanesulfonate, sodium perfluoromethylbutanesulfonate, potassium perfluoromethylbutanesulfonate, sodium perfluorooctanesulfonate, and potassium perfluorooctanesulfonate are suggested as specific examples of the metal salts of perfluoroalkane sulfonic acids. Sodium salt of diphenylsulfone-3-sulfonic acid, potassium salt of diphenylsulfone-3-sulfonic acid, sodium salt of 4,4-dibromodiphenylsulfone-3-sulfonic acid, potassium salt of 4,4-dibromodiphenylsulfone-3-sulfonic acid, calcium salt of 4-chloro-4-nitrodiphenylsulfone-3-sulfonic acid, disodium salt of diphenylsulfone-3,3-disulfonic acid, and dipotassium salt of diphenylsulfone-3,3-disulfonic acid are suggested as specific examples of metal salts of aromatic sulfone sulfonic acids. The quantity of this component is 0.02 to 1 wt% per 100 parts by weight of component (A).

The present composition comprises the above-described component (A) and component (B), or component (A), component (B), and component (C); however, in order to further increase its flame retardancy, a fluorocarbon resin powder can be compounded therewith as component (D). The fluorocarbon resins, from which such fluorocarbon resin powder is obtained, are exemplified by fluoroethylene resins (polymers of monomers in which one or more fluorine atoms are substituted for the hydrogen atoms of ethylene, with tetrafluoroethylene resin as their representative example), chlorotrifluoroethylene resin, tetrafluoroethylene-hexafluoroethylenepropylene resin, fluorinated vinyl resins, vinylidene fluoride resin, and dichlorodifluoroethylene resin. The shape of these fluorocarbon resin powders is normally spherical, but may also be filament-like. Component (D) is admixed at 0.01 to 5 parts by weight per 100 parts by weight of component (A).

Various known additives typically compounded with aromatic ring-containing organic resins may be compounded with the present composition so long as this does not impair the purpose of the present invention. Such additives are exemplified by glass fiber, glass beads, glass flakes, carbon black, calcium sulfate, calcium carbonate, calcium silicate, titanium oxide, alumina, silica, asbestos, talc, clay, mica, quartz powder, and other inorganic fillers; various synthetic resins, various elastomers, and other organic resin additives; hindered phenolic antioxidants, phosphorous acid ester-type antioxidants, phosphoric acid ester-type antioxidants, amine-type antioxidants, and other antioxidants; aliphatic carboxylic acid esters, paraffin, polyethylene waxes and other lubricants; various organic or inorganic pigments and colorants; benzotriazole-type UV absorbers, benzophenone-type UV absorbers, and other UV absorbers; hindered amine-type light stabilizers and other light stabilizers; phosphorus-based flame retardants and various other flame retardancy-imparting agents; various mold release agents; and various anti-static agents.

The present composition can be easily prepared by uniformly mixing the above-described component (A) and component (B), or components (A) to (C), or components (A) to (D). The equipment used for mixing the above components is exemplified, for instance, by ribbon blenders, Henschel mixers, Banbury mixers, drum tumblers, single screw extruders, double screw extruders, kneaders, multi-screw extruders, and the like. It is preferable to mix the above-mentioned components at a temperature of 200 to 350°C.

The superior flame retardancy of the present composition as described above makes it useful in various applications where the property is required, such as in electrical household appliances, automobile interiors, and other housing materials, and in materials used for electrical and electronic components.

### Working Examples

Next, the present invention is explained in detail by referring to working examples. In the working examples, flame retardancy was measured using the oxygen index in accordance with JIS K 7201, "Plastics - Determination of burning behavior by oxygen index." The moldability of the organic resin composition was evaluated by measuring the melt index (MI value) in accordance with JIS K7210 using a load of 1.2 kg. The branched organopolysiloxanes SNR1, SNR2, SNR3, SNR4, SNR5, SNR6, and SNR7 used in the working examples had the average unit formulas and average molecular formulas indicated in Table 1 and the characteristics indicated in Table 2. In Table 1, Me represents methyl, Pr represents propyl, Ph represents phenyl, D represents a Me₂SiO_{2/2} unit, D^{Ph2} represents a Ph₂SiO_{2/2} unit, T^{Pr} represents a PrSiO_{3/2} unit, and T^{Ph} represents a PhSiO_{3/2} unit. The analysis of the molecular structure of the branched organopolysiloxanes used in the working examples was carried out using nuclear magnetic resonance spectroscopy (NMR), and the measurement of the weight average molecular weight was carried out using gel permeation chromatography (GPC). The term "weight average molecular weight" refers to a value obtained by conversion to a polystyrene standard of known molecular weight.

Reference Example 1. Toluene (110 g), methyl ethyl ketone (40 g), and water (30 g) were placed in a 1-L four-neck flask equipped with a stirrer, a cooling system, a dropping funnel, and a thermometer. Next, a solution composed of phenyltrichlorosilane (79.8 g), propyltrichlorosilane (28.5 g), dimethyldichlorosilane (7.7 g), and toluene (40 g) was added to the flask in a dropwise manner through the funnel while cooling the flask in an ice bath. Upon termination of the dropwise addition, the mixture was stirred at room temperature for 30 minutes and then refluxed for 1 hour to bring hydrolysis to completion. After cooling, 30 mL toluene were added to the solution, the solution was left to stand, and the aqueous layer was removed from it. Subsequently, a washing operation in which water was added to the solution, the solution was stirred and left to stand, and the aqueous layer was removed therefrom was repeated three times. Then, a 4% solution of sodium bicarbonate was added to the resultant toluene phase, the mixture was refluxed for 1 hour, cooled, and then washed with water three times to give a toluene solution of a branched organopolysiloxane. The solid matter content of the toluene solution was adjusted to 30 wt% and 0.8 g of a 10% aqueous solution of potassium hydroxide was added thereto. Next, an ester adapter was attached to the flask and refluxing was carried out while separating off the generated water. Four hours after the start of refluxing, the solution was cooled, neutralized with acetic acid, and then washed with water three times, dried, and solidified, obtaining a solid organopolysiloxane. The obtained organopolysiloxane (called SHR1 hereinbelow) contained 63 mol% of PhSiO_{3/2} units, 27 mol% of PrSiO_{3/2} units, 10 mol% of Me₂SiO_{2/2}, and 0.2 wt% of hydroxyl groups at the ends of the molecular chain. In addition, its weight average molecular weight was 3,800.

Reference Example 2. With the exception of using phenyltrichlorosilane (70.9 g), propyltrichlorosilane (25.3 g), and dimethyldichlorosilane (15.5 g), a solid organopolysiloxane was obtained in the same manner as in Reference Example 1. The obtained organopolysiloxane (called SHR2 hereinbelow) contained 56 mol% of PhSiO_{3/2} units, 24 mol% of PrSiO_{3/2} units, 20 mol% of Me₂SiO_{2/2}, and 0.2 wt% of hydroxyl groups at the ends of the molecular chain. In addition, its weight average molecular weight was 4,000.

Reference Example 3. With the exception of using phenyltrichlorosilane (62.0 g), propyltrichlorosilane (22.2 g), and dimethyldichlorosilane (23.2 g), a solid organopolysiloxane was obtained in the same manner as in Reference Example 1. The obtained organopolysiloxane (called SHR3 hereinbelow) contained 49 mol% of PhSiO_{3/2} units, 21 mol% of PrSiO_{3/2} units, 30 mol% of Me₂SiO_{2/2}, and 0.2 wt% of hydroxyl groups at the ends of the molecular chain. In addition, its weight average molecular weight was 3,600.

Reference Example 4. Toluene (110 g), methyl ethyl ketone (40 g), and water (30 g) were placed in a 1-L four-neck flask equipped with a stirrer, a cooling system, a dropping funnel, and a thermometer. Next, a solution composed of phenyltrichlorosilane (88.8 g), dimethyldichlorosilane (23.2 g), and toluene (40 g) was added to the flask in a dropwise manner through the funnel while cooling the flask in an ice bath. Upon termination of the dropwise addition, the mixture was stirred at room temperature for 30 minutes and then refluxed for 1 hour to bring hydrolysis to completion. After cooling, 30 mL toluene were added to the solution, the solution was left to stand, and the aqueous layer was removed from it. Subsequently, a washing operation in which water was added to the solution, the solution was stirred and left to stand, and the aqueous layer was removed therefrom, was repeated three times. Then, a 4% solution of sodium bicarbonate was added to the toluene phase, the mixture was refluxed for 1 hour, cooled, and then washed with water three times to give a toluene solution of a branched organopolysiloxane. The solid matter content of the toluene solution was adjusted to 60 wt% and 0.8 g of a 10% aqueous solution of potassium hydroxide was added thereto. Next, an ester adapter was attached to the flask and refluxing was carried out while separating off the generated water. Five hours after the start of refluxing, the solution was cooled, neutralized with acetic acid, washed with water three times, dried, and solidified, obtaining a solid organopolysiloxane. The obtained organopolysiloxane (called SHR4 hereinbelow) contained 70 mol% of PhSiO_{3/2} units, 30 mol% of Me₂SiO_{2/2}, and 0.2 wt% of hydroxyl groups at the ends of the molecular chain. In addition, its weight average molecular weight was 4,100.

Reference Example 5. Toluene (110 g), methyl ethyl ketone (40 g), and water (30 g) were placed in a 1-L four-neck flask equipped with a stirrer, a cooling system, a dropping funnel, and a thermometer. Next, a solution composed of phenyltrichlorosilane (79.8 g), propyltrichlorosilane (28.5 g), dimethyldichlorosilane (7.7 g), and toluene (40 g) was added to the flask in a dropwise manner through the funnel while cooling the flask in an ice bath. Upon termination of the dropwise addition, the mixture was stirred at room temperature for 30 minutes and then refluxed for 1 hour to bring hydrolysis to completion. After cooling, 30 mL toluene were added to the solution, the solution was left to stand, and the aqueous layer was removed from it. Subsequently, a washing operation in which water was added to the solution, the solution was stirred and left to stand, and the aqueous layer was removed therefrom was repeated three times. Then, a 4% solution of sodium bicarbonate was added to the toluene phase, the mixture was refluxed for 1 hour, cooled, washed with water three times, dried and solidified producing a solid organopolysiloxane. The obtained organopolysiloxane (called SHR5 hereinbelow) contained 63 mol% of PhSiO_{3/2} units, 27 mol% of PrSiO_{3/2}, 10 mol% of Me₂SiO_{2/2}, and 3.6 wt% of hydroxyl groups at the ends of the molecular chain. In addition, its weight average molecular weight was 5,000.

Reference Example 6. Toluene (100 g) and water (380 g) were placed in a 1-L four-neck flask equipped with a stirrer, a cooling system, a dropping funnel, and a thermometer, and after heating the mixture to 80°C a solution composed of phenyltrichlorosilane (79.8 g), propyltrichlorosilane (28.5 g), and dimethyldichlorosilane (7.7 g) was added to the flask in a dropwise manner. Then, the mixture was refluxed for 1 hour to bring hydrolysis to completion. After cooling, the solution was left to stand and the aqueous layer was removed from it, followed by repeating three times a washing operation in which water was added to the solution, the solution was stirred and left to stand, and the aqueous layer was removed therefrom. Next, an ester adapter was attached to the flask and refluxing was carried out for two hours while separating off the generated water. The solution was cooled to room temperature. Insoluble matter was removed therefrom by filtering the obtained organopolysiloxane solution, which was then dried and solidified, producing a solid organopolysiloxane. The obtained organopolysiloxane (called SHR6 hereinbelow) contained 63 mol% of PhSiO_{3/2} units, 27 mol% of PrSiO_{3/2}, 10 mol% of Me₂SiO_{2/2}, and 0.2 wt% of hydroxyl groups at the ends of the molecular chain. In addition, its weight average molecular weight was 18,000.

Reference Example 7. Toluene (110 g), methyl ethyl ketone (40 g), and water (30 g) were placed in a 1-L four-neck flask equipped with a stirrer, a cooling system, a dropping funnel, and a thermometer. Next, a solution composed of phenyltrichlorosilane (101.5 g), diphenyldichlorosilane (30.4 g), and toluene (40 g) was added to the flask in a dropwise manner through the funnel while cooling the flask in an ice bath. Upon termination of the dropwise addition, the mixture was stirred at room temperature for 30 minutes and then refluxed for 1 hour to bring hydrolysis to completion. After cooling, 30 mL toluene were added to the solution, the solution was left to stand, and the aqueous layer was removed from it. Subsequently, a washing operation in which water was added to the solution, the solution was stirred and left to stand, and the aqueous layer was removed therefrom was repeated three times. Then, a 4% solution of sodium bicarbonate was added to the toluene phase, the mixture was refluxed for 1 hour, cooled, and washed with water three times to give a toluene solution of a branched organopolysiloxane. Insoluble matter was removed from the organopolysiloxane solution by filtering and a solid organopolysiloxane was obtained by removing toluene under reduced pressure. The obtained organopolysiloxane (called SHR7 hereinbelow) contained 80 mol% of PhSiO_{3/2} units and 2 mol% of Ph₂SiO_{2/2}, and contained 3.3 wt% of hydroxyl groups at the ends of the molecular chain. In addition, its weight average molecular weight was 4,600.

**Table 1**

| Branched Organopolysiloxane | Average Unit Formula | Average Molecular Formula |
|---|---|---|
| SNR1 | Me_{0.2}Pr_{0.27}Ph_{0.63}(HO)_{0.012} SiO_{1.44} | D_{0.1}T^{Pr}_{0.27}T^{Ph}_{0.63}(HO_{1/2})_{0.012} |
| SNR2 | Me_{0.4}Pr_{0.24}Ph_{0.56}(HO)_{0.012} SiO_{1.39} | D_{0.2}T^{Pr}_{0.24}T^{Ph}_{0.56}(HO_{1/2})_{0.012} |
| SNR3 | Me_{0.6}Pr_{0.21}Ph_{0.49}(HO)_{0.012} SiO_{1.34} | D_{0.3}T^{Pr}_{0.21}T^{Ph}_{0.49}(HO_{1/2})_{0.012} |
| SNR4 | Me_{0.60}Ph_{0.70}(HO)_{0.014}SiO_{1.34} | D_{0.30}T^{Ph}_{0.70}(HO_{1/2})_{0.014} |
| SNR5 | Me_{0.2}Pr_{0.27}Ph_{0.63}(HO)_{0.25} SiO_{1.33} | D_{0.1}T^{Pr}_{0.27}T^{Ph}_{0.63}(HO_{1/2})_{0.25} |
| SNR6 | Me_{0.2}Pr_{0.37}Ph_{0.63}(HO)_{0.23} SiO_{1.34} | D_{0.1}T^{Pr}_{0.27}T^{Ph}_{0.63}(HO_{1/2})_{0.23} |
| SNR7 | Ph_{1.20}(HO)_{0.28}SiO_{1.26} | D^{Ph2}_{0.02}T^{Ph}_{0.80}(HO_{1/2})_{0.28} |

**Table 2**

| Branched Organopolysiloxane | Aryl group Content (mol%) | Hydroxyl Radical Content (wt%) | Weight Average Molecular Weight |
|---|---|---|---|
| SNR1 | 57 | 0.2 | 3800 |
| SNR2 | 47 | 0.2 | 4000 |
| SNR3 | 38 | 0.2 | 3600 |
| SNR4 | 54 | 0.2 | 4100 |
| SNR5 | 57 | 3.6 | 5000 |
| SNR6 | 57 | 3.0 | 18000 |
| SNR7 | 100 | 3.3 | 4600 |

### Working Examples 1 to 7 and Comparative Examples 1 to 4.

Flame retardant polycarbonate resin compositions were prepared by mixing an aromatic polycarbonate resin (produced by Idemitsu Petrochemical Co., Ltd., trade name: TAFURON A1900), as the aromatic ring-containing organic resin, and siloxanes SNR1 to SNR7 listed in Table 1 above as the branched organopolysiloxane in the compounding proportions listed in Table 2 to Table 5, which are shown below. Also, sodium trichlorobenzenesulfonate (produced by Dainippon Ink & Chemicals, Inc., trade name: MEGAFUAKKU F114) was used as component (C) and perfluoroethylene (from Daikin Industries, Ltd., trade name: POLYFLON™ MPA, FA-500) and was used as component (D). The method of preparation is described below. The polycarbonate resin was charged to a mixing apparatus (the "Labo Plastomill," manufactured by Toyo Seiki Seisaku-Sho, Ltd.), and melted by heating to 280 to 320°C. Subsequently, the branched organopolysiloxanes were charged to the mixing apparatus and kneaded with the resin to produce flame retardant polycarbonate resin compositions. Next, the compositions were injection molded at a molding temperature of 280 to 320°C. The oxygen index of the obtained moldings was measured and the results of the measurement are listed in Table 3 to Table 5, which are shown hereinbelow.

**Table 3.**

| | Working Example 1 | Working Example 2 | Working Example 3 | Working Example 4 |
|---|---|---|---|---|
| Composition Polycarbonate resin (parts) Branched organopolysiloxane (parts) | 100 parts | 100 parts | 100 parts | 100 parts |
| SHR1 | 5 | | | |
| SHR2 | | 5 | | |
| SHR3 | | | 5 | |
| SHR4 | | | | 5 |
| Flame retardancy Oxygen index | 38 | 38 | 37 | 32 |
| Moldability MI value (g/10 min) | 23 | 23 | 23 | 23 |

**Table 4.**

| | Comparative Example 1 | Comparative Example 2 | Comparative Example 3 | Comparative Example 4 |
|---|---|---|---|---|
| Composition Polycarbonate resin (parts) | 100 parts | 100 parts | 100 parts | 100 parts |
| Branched organopolysiloxane (parts) | | | | |
| SHR5 | | 5 | | |
| SHR6 | | | 5 | |
| SHR7 | | | | 5 |
| Flame retardancy Oxygen index | 26 | 26 | 32 | 36 |
| Moldability MI value (g/10 min) | 21 | 22 | 20 | 22 |

**Table 5.**

| | Working Example 5 | Working Example 6 | Working Example 7 |
|---|---|---|---|
| Composition Polycarbonate resin (parts) Branched organopolysiloxane (parts) | 100 parts | 100 parts | 100 parts |
| SHR1 | 5 | 5 | 5 |
| Fluororesin powder | 0.5 | | 0.5 |
| Sodium trichlorobenzenesulfonate Characteristics | | 0.1 | 0.1 |
| Oxygen index | 40 | 40 | 42 |

## Claims

1. A flame retardant organic resin composition comprising:
(A) 100 parts by weight of an aromatic ring-containing organic resin; and
(B) 0.01 to 50 parts by weight of a branched organopolysiloxane of average molecular formula (R¹₂SiO_{2/2})ₐ(R²SiO_{3/2})_{b}(SiO_{4/2})_{c}(R³₃O_{1/2})_{d}(HO_{1/2})ₑ, wherein R¹, R² and R³ are independently monovalent hydrocarbon groups selected from alkyl groups comprising 1 to 12 carbon atoms, alkenyl groups comprising 1 to 12 carbon atoms, and aryl groups comprising 6 to 12 carbon atoms, the content of aryl groups as a proportion of all the monovalent hydrocarbon groups is in a range of 20 mol% to 80 mol%, subscripts a and b are positive numbers, and subscripts c, d and e are 0 or positive numbers, having a weight average molecular weight within a range of 300 to 10,000, and a content of silicon-bonded hydroxy groups of not more than 1 wt%.

2. The flame retardant organic resin composition according to claim 1, wherein component (A) is a thermoplastic resin.

3. The flame retardant organic resin composition according to claim 1 or 2, wherein component (A) is an aromatic polycarbonate resin or a copolymer thereof.

4. The flame retardant organic resin composition according to any of claims 1 to 3, wherein the content of silicon-bonded hydroxyl groups in component (B) is not more than 0.5 wt%.

5. The flame retardant organic resin composition according to any of claims 1 to 4, wherein R¹ in the average molecular formula of component (B) is selected from alkyl, alkenyl, and aryl and 20 to 100 mol% of R¹ is aryl.

6. The flame retardant organic resin composition according to any of claims 1 to 5, wherein the alkyl groups in component (B) are selected from methyl, ethyl and propyl and the aryl groups are phenyl.

7. The flame retardant organic resin composition according to any of claims 1 to 6, wherein component (B) is solid at room temperature.

8. The flame retardant organic resin composition according to any of claims 1 to 7, wherein component (B) has a softening point not less than 80°C.

9. The flame retardant organic resin composition according to any of claims 1 to 8, wherein the content of silicon-bonded hydroxyl groups in component (B) is 0 to 0.2 wt%.

10. The flame retardant organic resin composition according to any of claims 1 to 9, wherein component (B) is a branched organopolysiloxane obtained by an equilibration reaction utilizing an alkali metal catalyst.

11. The flame retardant organic resin composition according to any of claims 1 to 10, further comprising (C) 0.02 to 1 part by weight of an alkali metal salt of an organic acid ester or an organic acid, or an alkaline earth metal salt of an organic ester or an organic acid.

12. The flame retardant organic resin composition according to any of claims 1 to 11, further comprising (D) 0.01 to 5 parts by weight of a fluororesin powder

13. The flame retardant organic resin composition according to any of claims 1 to 12, wherein in component (B) the content of aryl groups as a proportion of all the monovalent hydrocarbon groups represented by R¹, R² and R³ is in the range of 40 mol% to 80 mol%.

14. The flame retardant organic resin composition according to any of claims 1 to 13, comprising 0.1 to 10 parts by weight of component (B) per 100 parts by weight of component (A).
